# EUROPEAN PATENT APPLICATION

(11) **EP 4 851 255 A1**
(43) Date of publication of application: **09.12.2026**
(21) Application number: 26166897.4
(22) Date of filing: 23.03.2026
(51) Int. Cl.: C09D 5/00

(54) **ROOFING REPAIR COMPOSITION AND METHOD**

(30) Priority: 02.06.2025 GB 202508638
(71) Applicant: Roberts Manufacturing Limited, Flint, Flintshire CH6 5XA (GB)
(72) Inventor: ROBERTS, Patrick David, Flint, CH6 5XA (GB)
(74) Representative: Bartle Read

(57) **Abstract**

A roofing repair composition comprising a blend of fibres comprising milled glass fibres ranging from 100 µm to 1300 µm in length and chopped strand fibres ranging from 2 to 4mm in length, a polyester resin and a curing catalyst

## Description

### Field of the Invention

The present invention relates to a roofing repair composition and method. More particularly, the present invention relates to a roofing repair composition and method for use in wet conditions, particularly on flat roofs, low-slope roofs, pitched roofs, and shingle-covered roof assemblies.

### Background of the Invention

Roofing systems of all types, including flat, low-slope, and pitched roofs, are susceptible to water ingress when the primary waterproofing layer is compromised.

Flat and low-slope roofs are inherently more susceptible to water ingress due to their no- or low-slope configuration, which allows water to pool on the surface-a phenomenon known as "ponding water." This persistent water accumulation exerts prolonged hydrostatic pressure on the waterproofing layer, meaning the membrane must offer exceptional water resistance and remain intact under extended immersion.

Pitched roofs, including those finished with asphalt singles, composite shingles, wood shakes, slate, or tile, are likewise vulnerable to water ingress during storm events, wind-driven rain, ice dam formation, or where shingles are cracked, displaced, or punctured. In such cases, water may penetrate beneath overlapping single courses and migrate along the roof deck, often while the surface remains wet and unsuitable for conventional repair methods.

Traditional roofing membranes, such as bituminous felt, are cost-effective but often fail to deliver a seamless, durable, and long-term waterproofing solution. These materials are typically applied in sheets, introducing seams and potential failure points. In contrast, liquid-applied waterproofing membranes represent a premium alternative, capable of forming continuous, monolithic coatings that eliminate laps and seams entirely. Their ability to conform to complex roof geometries and details such as upstands, protrusions, penetrations and overlapping single profiles makes them especially suitable for refurbishment and detailing.

However, unreinforced liquid-applied compositions often lack the tensile strength and crack-bridging capabilities needed for long-term resilience. Without the inclusion of a reinforcement material-typically a glass or polyester fabric-such compositions are prone to premature mechanical failure, especially under thermal movement or structural flex commonly experienced on pitched roofs subject to wind uplift and thermal cycling.

In the repair sector, liquid compositions are widely marketed for DIY use, but these are frequently based on acrylic or rubber chemistries, which offer ease of use but suffer from inferior mechanical strength and limited lifespans. Polyester-based liquid roofing compositions, often sold under the GRP (Glass Reinforced Plastic) category, are highly regarded in the professional sector for their durability and mechanical properties. However, their use is restricted due to composition complexity. GRP compositions require multiple components, including careful catalyst mixing and the correct wetting-out of the glass reinforcement. These compositions are highly sensitive to moisture, with water contamination causing improper curing, pin-holing, and ultimately system failure. Thus, application must only occur on completely dry surfaces and under favourable weather conditions, usually by a professional.

These limitations are particularly problematic for emergency shingle repairs, where active leaks often occur during rainfall, snowmelt, or immediately following storm damage, and where drying the roof surface is impractical or unsafe.

### Summary of the Invention

In accordance with a first aspect of the present invention, there is provided a roofing repair composition comprising:
(a) a blend of fibres comprising milled glass fibres ranging from 100 µm to 1300 µm in length and chopped strand fibres ranging from 2 to 4mm in length
(b) a polyester resin
(c) a curing catalyst

The present invention overcomes or alleviates the limitations of the prior art by introducing a novel water-resistant polyester roofing formulation, permitting application in wet conditions-including in the presence of standing water, or even submerged underwater. This addresses a critical issue in flat roof repair, where ponding water is often present and difficult to eliminate during emergency repairs, and equally addresses emergency repair scenarios on pitched and shingle roofs where rainwater, surface moisture, or saturated substrates prevent conventional dry-application techniques. Advantageously, the formulation is capable of being applied to inclined and vertical roof planes, including pitched roof decks and shingle surfaces, without excessive sagging, runoff, or wash-out.

The formulation may comprise a tailored combination of fibre reinforcement-specifically a blend of 6% milled glass fibres (ranging from 100 µm to 1300 µm in length) and 1% chopped strand fibres (3 mm). These fibres may be selected not only for their mechanical reinforcement properties but also for their ability to maintain the structural integrity and body of the resin composition in the presence of water. The correct fibre combination may advantageously ensure that the resin does not disperse or delaminate when exposed to moisture on sloped or overlapping roofing substrates such as shingles.

To further enhance performance, the formulation may comprise fumed silica, which adjusts the viscosity and thixotropic properties of the resin. This facilitates the composition being easily applied on horizontal surfaces while also providing sufficient sag resistance for verticals and upstands. This sag resistance is particularly advantageous for pitched roofs, where controlled placement on inclined single surfaces is required. This can be a particularly useful feature for comprehensive waterproofing coverage.

The present invention may provide a liquid-applied flat roofing repair kit for use in wet conditions, comprising:
- a single resin component consisting of a polyester resin formulation having a tailored blend of pre-dispersed glass fibres, the blend comprising both milled fibres and chopped strand fibres in selected lengths and loadings to enhance mechanical strength and maintain resin integrity during application in the presence of water;
- a thixotropy-modifying agent dispersed within the resin formulation to provide controlled viscosity and sag resistance, enabling the composition to remain workable on both horizontal and vertical surfaces under wet or submerged conditions;
- a peroxide-based catalyst supplied in paste form, optimized for packaging safety and consistent mixing in field applications; and optionally,
- an applicator tool for mixing and applying the resin and catalyst.

Advantageously the resin formulation may be engineered to resist dispersion, dilution, or wash-out during application in ambient damp, high-humidity, or fully submerged environments, and cures to form a continuous, waterproof barrier.

The ratio of resin to catalyst may range from1% to 5%, advantageously, 3% to 4.5%.

The catalyst may comprise a peroxide-based catalyst. The catalyst may comprise benzoyl peroxide.

The composition may further comprise fumed silica. The fumed silica may be present in an amount of 0.5 to 5%, advantageously 0.5 to 3% , by weight of the composition.

The composition may further comprise a thixotropy-modifying agent. Advantageously, the thixotropy-modifying agent is Cabosil Fumed Silica.

Advantageously, the viscosity of the repair composition is in the range of 400 to 1400 cP, more advantageously 450 - 700 cPs. Viscosity being measured at 25 deg C and at atmospheric pressure.

The milled glass fibres may advantageously comprise between 1-8% by weight of the repair composition.

The chopped strand fibres may advantageously comprise 0.1% to 3% by weight of the repair composition. The chopped strand fibres may comprise one or more synthetic fibres. Advantageously, the chopped strand fibres may comprise polyester and/or polyacrylonitrile. The chopped strand fibres may be 2mm to 3mm in length. Advantageously, the chopped strand fibres are 3mm in length.

In accordance with a further aspect of the present invention there is provided a method of repairing a roof in wet conditions, comprising the steps of:
(A) mixing together a blend of fibres comprising milled glass fibres ranging from 100 µm to 1300 µm in length and chopped strand fibres ranging from 2mm to 4mm in length and a polyester resin with a viscosity in the range of 400 to 1400 cP with a curing catalyst to obtain an activated mixture;
(B) applying the activated mixture to a surface.

In accordance with a further aspect of the present invention there is provided a kit of parts for a roof repair composition for use in wet conditions comprising:
(I) a blend of fibres comprising milled glass fibres ranging from 100 µm to 1300 µm in length and chopped strand fibres ranging from 2mm to 4mm in length
(II) a polyester resin with a viscosity in the range of 400 to 1400 cP
(III) a curing catalyst
(IV)a stirrer
(V) an applicator; and optionally,
(VI)an instruction leaflet

In accordance with a further aspect of the present invention there is provided a method of repairing a roof comprising the use of the composition as claimed as described hereinabove wherein the composition is used in wet conditions.

The present invention will now be described, by way of example only, with reference to accompanying figures and examples:

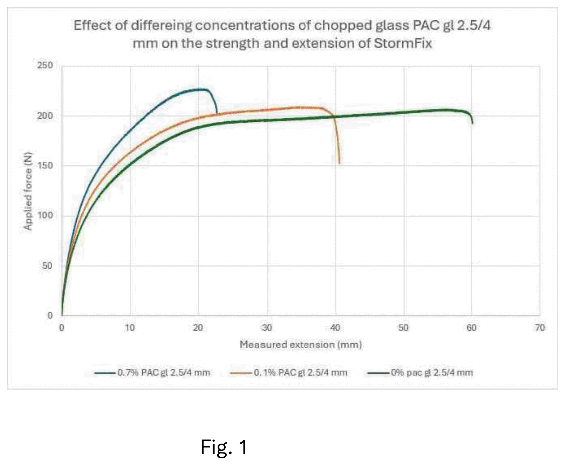

Fig. 1 is a graph shows the effect of differing concentrations of chopped glass PAC gl 2.5/4mm on the strength and extension of the composition of the present invention.

### Examples

### Example A

Resins with viscosities in the range of 400 to 1400 cP, incorporating the specified glass fibre blend, achieved a consistent body and allowed application at a coverage rate of at least 1.5mm, and ideally between 2mm and 4mm, in fully wet conditions without dispersion or wash-out. This found that the ideal range for milled glass fibres was between 1-8% by weight, and chopped strand fibres 0.1% to 3% by weight

### Example B

When the viscosity exceeded 1400 cP and thixotropy was increased beyond target levels due to higher fibre content, the resulting mixture entrapped excessive air during application. This led to an increase in air bubble formation, which severely negatively impacted the cured film's mechanical strength.

### Example C

At excessively high viscosities (above 700 cP), mixing of the benzoyl peroxide (BPO) catalyst was inconsistent, leading to poor curing and the risk of uncured resin sections within the final waterproofing layer. This can be visually seen by undissolved catalyst in the final product.

### Example D

Formulations with viscosities greater than 1000 cP were too thick to be applied easily with a roller or brush, resulting in poor flow characteristics and user difficulty during application. The poor application can be seen by the inconsistent coverage rates of the product in application.

### Example E

When thixotropic values dropped below 6000, the liquid sagged on vertical surfaces and upstands, compromising coverage and leaving areas exposed to potential ingress.

### Example F

When chopped strand fibres greater than 3mm are used, the mechanical properties are negatively impacted

Fig. 1 shows the effect of a 4mm chopped strand fibre. As the concentration increases, the maximum elongation before breakage drastically decreases with a minimal increase in strength. From this data it was decided that the 4mm fibre did not offer enough benefit to the formulation and would not be used.

While the specification has described in detail certain exemplary embodiments, it will be appreciated that those skilled in the art, upon attaining an understanding of the foregoing, may readily conceive of alterations to, variations of, and equivalents to these embodiments. Accordingly, it should be understood that this disclosure is not to be unduly limited to the illustrative embodiments set forth hereinabove. Various exemplary embodiments have been described. These and other embodiments are within the scope of the following claims.

## Claims

1. A roofing repair composition for use in wet conditions comprising:
a) a blend of fibres comprising milled glass fibres ranging from 100 µm to 1300 µm in length and chopped strand fibres less than 4mm in length ,
b) a polyester resin with a viscosity in the range of 400 to 1400 cP at 25 °C and atmospheric pressure,
c) a curing catalyst.

2. The roof repair composition of claim 1, wherein a volume ratio of the resin to catalyst ranges from 3% to 4.5%.

3. The roof repair composition of claim 1 or 2, wherein the catalyst comprises benzoyl peroxide.

4. The roof repair composition of any one the previous claims comprising fumed silica.

5. The roof repair composition as claimed in claim 4 wherein the fumed silica comprises 0.5 - 3% by weight of the composition.

6. The roofing repair composition of any one of the previous claims further comprising a thixotropy-modifying agent.

7. The roof repair composition of claim 6 wherein the thixotropy-modifying agent is cabosil fumed silica.

8. The roof repair composition of claim 7 wherein the viscosity of the repair composition is 450 - 700 cPs at 25 °C and atmospheric pressure.

9. The roof repair composition of any one of the previous claims wherein the milled glass fibres comprise between 1-8% by weight of the repair composition.

10. The roof repair composition of any one of the previous claims wherein the chopped strand fibres comprise 0.1% to 3% by weight of the repair composition.

11. The roof repair composition of any one of the previous claims further comprising an applicator selected from a brush, a pad, a squeegee, a roller, a sprayer, or a combination thereof.

12. The roof repair composition of any one of the previous claims the length of the fibres range from 2mm to 4mm in length.

13. The roof repair composition of claim 12 wherein the chopped strand fibres are 2mm to 3mm in length.

14. A method of repairing a roof in wet conditions, comprising the steps of:
A) mixing together a blend of fibres comprising milled glass fibres ranging from 100 µm to 1300 µm in length and chopped strand fibres less than 4mm in length, and a polyester resin with a viscosity in the range of 400 to 1400 cP at 25 °C and atmospheric pressure with a curing catalyst to obtain an activated mixture;
(B) applying the activated mixture to a surface.

15. The method of claim 14 wherein step (b) is completed within 0-30 minutes after beginning step (a); and/or wherein the length of the chopped strand fibres range from 1mm to 3mm in length.

16. A kit of parts for a roof repair composition for use in wet conditions comprising:
(I) a blend of fibres comprising milled glass fibres ranging from 100 µm to 1300 µm in length and chopped strand fibres less than 4mm in length
(II) a polyester resin with a viscosity in the range of 400 to 1400 cP at 25 °C and atmospheric pressure
(III) a curing catalyst
(IV) a stirrer
(V) an applicator; and optionally,
(VI) an instruction leaflet

17. A method of repairing a roof comprising the use of the composition as claimed in anyone of claims 1 to 13 wherein the composition is used in wet conditions.

18. A flat roof repaired using a composition as claimed in any one of claims 1 to 13, a method as claimed in any one of claims 14 to 15 or 17, and/or a kit of parts as claimed in claim 16.
